# EUROPÄISCHE PATENTSCHRIFT

(11) **EP 2 263 002 B1**
(45) Veröffentlichungstag und Bekanntmachung des Hinweises auf die Patenterteilung: **01.02.2012**
(21) Anmeldenummer: 09727895.6
(22) Anmeldetag: 30.03.2009
(51) Int. Cl.: F03B 13/08

(54) **WASSERKRAFTWERK**
HYDROPOWER PLANT
CENTRALE HYDROÉLECTRIQUE

(30) Priorität: 31.03.2008 CH 478082008
(43) Veröffentlichungstag der Anmeldung: 22.12.2010
(73) Patentinhaber: AWEG AG für Wasser und Energie, 6300 Zug (CH)
(72) Erfinder: ZWAHLEN, Adrian, CH-3415 Hasle-Rüegsau (CH)
(74) Vertreter: Scheuzger, Beat Otto
(86) Internationale Anmeldenummer: PCT/EP2009/053715
(87) Internationale Veröffentlichungsnummer: WO 2009/121824

(56) Entgegenhaltungen:
- WO-A1-99/27251
- DE-A1- 4 139 134

## Beschreibung

### Technisches Gebiet

Die vorliegende Erfindung betrifft eine Anordnung zur Erzeugung von elektrischer Energie aus dem Antrieb einer Wasserturbine durch Wasserkraft und dem entsprechenden Antrieb eines Generators durch die Wasserturbine.

### Stand der Technik

Beim Bau eines Wasserkraftwerks ist vor Ort ein hoher technischer Aufwand notwendig. Neben dem Bau einer Staumauer ist insbesondere der Bau von Gebäuden zur Lagerung einer Wasserturbine und eines Generators nur durch Spezialisten zu bewerkstelligen. Die Bauzeit und die Baukosten eines Wasserkraftwerks sind dementsprechend hoch. Deshalb können heutzutage viele geeignete Standorte an Flüssen und Bächen nicht für die Energiegewinnung genutzt werden, da insbesondere an abgelegenen Standorten das Verhältnis zwischen den Kosten für die Erstellung eines Wasserkraftwerks und der gewonnenen Energie so schlecht ist, dass sich eine solche Investition nicht lohnt. Beim Betrieb eines Wasserkraftwerks entsteht zusätzlich ein Wartungsaufwand, welcher insbesondere für die Wartung der Wasserturbine und des Generators wiederum Spezialisten vor Ort bedingt.

WO 99/27251 offenbart eine Wasserkraftanlage mit einer Turbine und einem Generator, bei welcher diese Wasserkraftanlage oder zumindest Turbine und Generator in einem Norm-Container mithilfe eines Einschubrahmens eingebaut sind. Das Wasser zum Antrieb der Turbine wird über ein Einlaufrohr in den Container eingeführt. Zur Installation dieses Einlaufrohrs müssen die Schwenktüren des Containers geöffnet werden, so dass die Wasserkraftanlage von aussen sichtbar und durch eventuell hineinfallende Gegenstände beschädigbar ist. Zudem ist die Menge des zufliessenden Wassers durch den Durchmesser des Einlaufrohrs eingeschränkt.

### Darstellung der Erfindung

Es ist eine Aufgabe der vorliegenden Erfindung, eine neue Anordnung zur Erzeugung von elektrischer Energie aus dem Antrieb einer Wasserturbine durch Wasserkraft und dem entsprechenden Antrieb eines Generators durch die Wasserturbine vorzuschlagen, welche nicht die Nachteile des Standes der Technik aufweist. Die neue Anordnung zur Erzeugung von elektrischer Energie soll insbesondere bewirken, dass die kostengünstige Energiegewinnung aus Wasserkraft auch an abgelegenen Standorten ermöglicht wird.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass die Anordnung mindestens ein Behältnis umfasst, dass an der Anordnung mit dem mindestens einen Behältnis mindestens eine Einlassöffnung für das Überfluten mit Wasser eines ersten Bereichs der Anordnung angebracht ist, dass an einem zweiten Bereich der Anordnung eine aufgrund der Überflutung des ersten Bereichs antreibbare Wasserturbine angebracht ist, und dass die Einlassöffnung an einem oberen Drittel einer Seitenwand eines Behältnisses angebracht ist. Eine solche Anordnung hat insbesondere den Vorteil, dass eine kostengünstige Energiegewinnung aus Wasserkraft an abgelegenen Standorten ermöglicht wird, und dass ein möglichst grosser Bereich des Behältnisses, wie z.B. eines Standard-Containers, für das Überfluten durch Wasser genutzt werden kann.

In einer Ausführungsvariante ist die Wasserturbine an einem Ende eines Behältnisses angebracht. Eine solche Anordnung hat insbesondere den Vorteil, dass ein noch grösserer Bereich des Behältnisses für das Überfluten durch Wasser genutzt werden kann.

In einer weiteren Ausführungsvariante besteht die Einlassöffnung aus Lamellen, welche parallel zu einer Flussrichtung eines Wasserstroms angebracht sind und welche derart angeordnet sind, dass im Wasserstrom geführtes Schwemmgut wie z.B. Holz oder ähnliches an den Lamellen vorbeigeführt wird. Eine solche Anordnung hat insbesondere den Vorteil, dass die Wasserturbine vor einer Beschädigung durch von im Wasser treibenden Schwemmgut geschützt ist.

In einer anderen Ausführungsvariante besteht die Anordnung aus einem einzelnen Behältnis. Eine solche Anordnung hat insbesondere den Vorteil, dass die Erzeugung von elektrischer Energie mit einer leicht auswechselbaren Einheit gewährleistet werden kann.

In einer weiteren Ausführungsvariante umfasst die Anordnung einen Generator zur Erzeugung von elektrischer Energie. Eine solche Anordnung hat insbesondere den Vorteil, dass Wasserturbine und Generator optimal aufeinander abgestimmt werden können und dass die Anordnung schon bei der Herstellung umfassend getestet werden können.

In einer anderen Ausführungsvariante besteht die Wasserturbine aus einer Radturbine (ähnlich einem Wasserrad). Eine solche Anordnung hat insbesondere den Vorteil, dass die Anordnung besonders einfach und robust aufgebaut ist.

In einer weiteren Ausführungsvariante besteht die Wasserturbine aus einer Kaplan-Turbine oder aus einer Francis-Turbine. Eine solche Anordnung hat insbesondere den Vorteil, dass eine hohe Effizienz der Nutzung von Wasserkraft erreicht werden kann.

In einer wieder anderen Ausführungsvariante besteht die Wasserturbine aus einer archimedischen Schraube. Der Vorteil einer solchen Anordnung liegt insbesondere darin, dass dank der besonderen Effektivität der archimedischen Schraube ein noch höherer Wirkungsgrad der Anordnung erreicht werden kann.

Wieder in einer anderen Ausführungsvariante sind alle Teile der Anordnung vorgefertigt und am Einsatzort zusammenfügbar und aufbaubar sind. Der Vorteil dieser Ausführungsvariante liegt insbesondere darin, dass der Aufbau der Anordnung einfach vorgefertigt, transportiert und erst unmittelbar vor Einsatz vor Ort vorgenommen werden kann. Damit können die Installationskosten weiter reduziert werden.

### Kurze Beschreibung der Zeichnungen

Nachfolgend werden Ausführungsvarianten der vorliegenden Erfindung und nicht beanspruchte Ausführungsvarianten anhand von Beispielen beschrieben. Die Beispiele der Ausführungen werden durch folgende beigelegte Figuren illustriert:
Figur 1 zeigt schematisch eine perspektivische seitliche Ansicht einer Anordnung zur Erzeugung von elektrischer Energie gemäss einer nicht beanspruchten Ansführungsform.
Figur 2 zeigt schematisch einen Ausschnitt der Anordnung zur Erzeugung von elektrischer Energie gemäss einer ersten Ausführungsform der Erfindung mit einer Wasserturbine und einem Generator.
Figur 3 zeigt ein Ausführungsbeispiel einer Anordnung zur Erzeugung von elektrischer Energie gemäss der ersten Ausführungsform der Erfindung.
Figur 4 zeigt einen Längsschnitt des in Figur 3 gezeigten Ausführungsbeispiels der Anordnung zur Erzeugung von elektrischer Energie gemäss der ersten Ausführungsform der Erfindung.
Figur 5 zeigt einen Längsschnitt eines weiteren Ausführungsbeispiels einer Anordnung zur Erzeugung von elektrischer Energie gemäss der ersten Ausführungsform der Erfindung.
Figur 6 zeigt eine in einem Gelände eingebaute Anordnung zur Erzeugung von elektrischer Energie gemäss der ersten Ausführungsform der Erfindung.
Figur 7 zeigt einen Querschnitt der in einem Gelände eingebauten Anordnung zur Erzeugung von elektrischer Energie gemäss der ersten Ausführungsform der Erfindung aus Figur 6.
Figur 8 zeigt eine Ausführungsvariante einer Einlassöffnung einer erfindungsgemässen Anordnung zur Erzeugung von elektrischer Energie.
Figur 9 zeigt schematisch eine perspektivische seitliche Ansicht einer Anordnung zur Erzeugung von elektrischer Energie gemäss einer nicht beanspruchten Ausführungsform.
Figur 10 zeigt einen Längsschnitt der in Figur 9 gezeigten Anordnung zur Erzeugung von elektrischer Energie gemäss einer nicht beanspruchten Ausführungsvariante.
Figur 11 zeigt eine in einem Gelände eingebaute Anordnung zur Erzeugung von elektrischer Energie gemäss einer zweiten Ausführungsvariante der vorliegenden Erfindung.

### Wege zur Ausführung der Erfindung

Die Erfindung kann unter Verwendung von irgendeinem Behältnis ausgeführt werden. Das Behältnis kann genormte oder nicht genormte Abmessungen aufweisen. Genormte Abmessungen erleichtern insbesondere den Transport des Behältnisses, da für ein genormtes Behältnis entsprechende Transportmöglichkeiten auf Lastwagen, Schiffen oder in Flugzeugen kostengünstig angeboten sind. Das Behältnis kann aus irgendeinem Material hergestellt sein, beispielsweise aus Metall, Beton oder Kunststoff. Nachfolgend wird die Erfindung unter Verwendung eines Standard-Containers als Behältnis beschrieben.

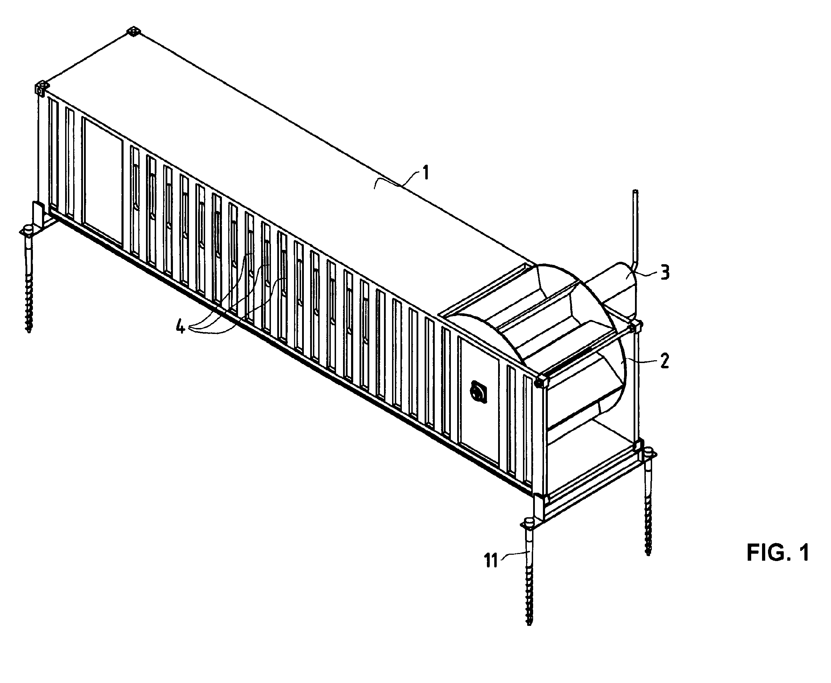

In Figur 1 bezieht sich das Bezugszeichen 1 auf einen Standard-Container. Der Standard-Container 1 kann aus Metall hergestellt sein und kann dazu dienen, Güter per Schiffsfracht, Luftfracht, Strassenfracht oder Bahnfracht zu transportieren. Derartige Standard-Container werden in grossen Massen hergestellt und stehen dementsprechend in grossen Massen zur Verfügung. Ein Standard-Container weist beispielsweise eine Standardbreite von 8 Fuss, eine Höhe zwischen 8 bis 9.6 Fuss und eine Länge von 20 bis 40 Fuss auf. Wie in Figur 1 skizziert, kann der Standard-Container 1 Seiten- oder Deckenwände mit einer Profilstruktur umfassen.

Wie in Figur 1 skizziert, kann an einem Ende des Standard-Containers 1 eine Wasserturbine 2 und ein Generator 3 angebracht sein. Dazu können an den Seitenwänden des Standard-Containers 1 Halterungen und/oder Bohrungen für die Aufnahme einer Achse der Wasserturbine 2 angebracht sein. Es können weiter am erwähnten Ende des Standardcontainers 1 Teile der Stirnseite und Teile der Deckenseite des Standard-Containers 1 entfernt sein, sodass die Wasserturbine 2 frei drehbar am Ende des Standard-Containers 1 gelagert werden kann. Der Generator 3 kann beispielsweise an der Aussenseite des Standard-Containers 1 angebracht sein. Selbstverständlich kann der Generator 3 auch an der Innenseite des Standard-Containers 1 angebracht sein. Für die Übertragung von mechanischer Energie von der Wasserturbine 2 an den Generator 3 kann irgendeine Vorrichtung - wie beispielsweise ein Getriebe, eine Kette oder Riemen - angebracht sein.

Wie in Figur 1 skizziert umfasst der Standard-Container 1 mindestens eine Einlassöffnung 4.

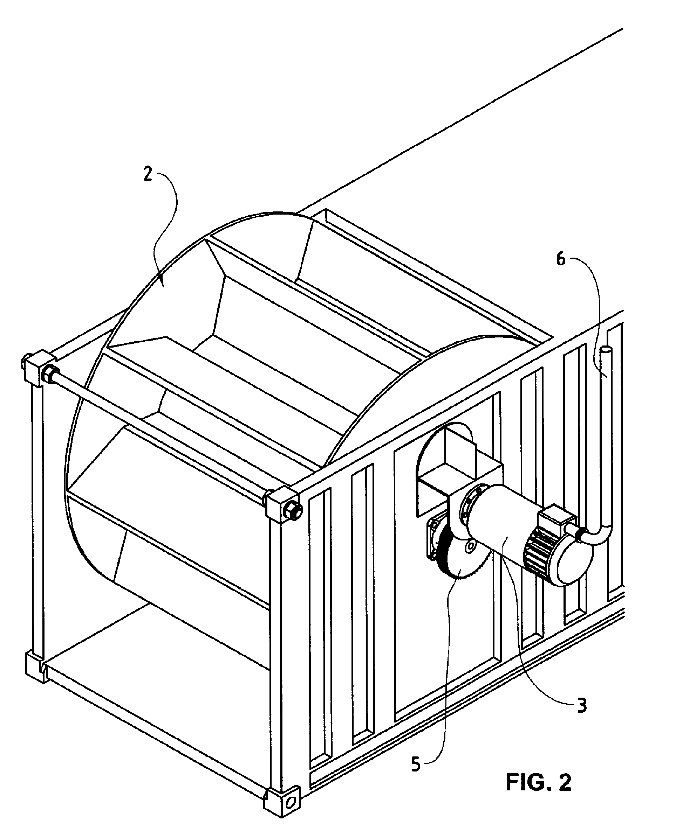

Figur 2 zeigt schematisch ein Ende des Standard-Containers 1 mit einer Wasserturbine 2 und einem Generator 3. Wie in Figur 2 skizziert, kann die Übertragung der mechanischen Energie von der Wasserturbine 2 auf den Generator 3 beispielsweise durch ein Getriebe 5 erfolgen. Die Abführung der durch den Generator erzeugten elektrischen Energie kann beispielsweise über in einem Rohr 6 angebrachte elektrische Leitungen erfolgen. Am Generator oder an irgendeiner anderen geeigneten Stelle kann ein Frequenzumformer angebracht sein, sodass unabhängig von der Drehzahl der Wasserturbine einem elektrischen Verbraucher stets elektrische Energie von derselben Frequenz, beispielsweise von 50 Hz oder von 60 Hz, zur Verfügung gestellt werden kann.

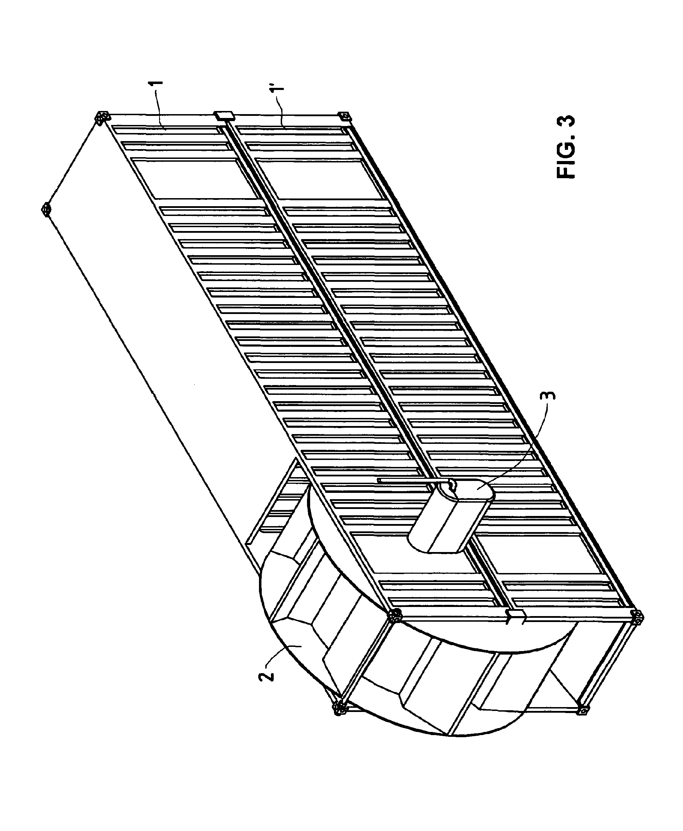

Figur 3 zeigt schematisch eine Anordnung mit zwei aufeinander gestapelten Standard-Container 1,1'. Wie in Figur 3 skizziert, können die gestapelten Standard-Container 1,1' insbesondere an Ecken starr verbunden sein, beispielsweise mit einer Schraubverbindung. Wie in Figur 3 skizziert können an einem Ende der aufeinander gestapelten Standard-Container 1,1' eine Wasserturbine 2 und ein Generator 3 angebracht sein. Auf dem in Figur 3 nicht sichtbaren Seitenteil des Standard-Containers 1 können wiederum Einlassöffnungen Der Vorteil der gestapelten Standard-Container 1,1' liegt insbesondere darin, dass eine höhere Leistung erzielt werden kann.

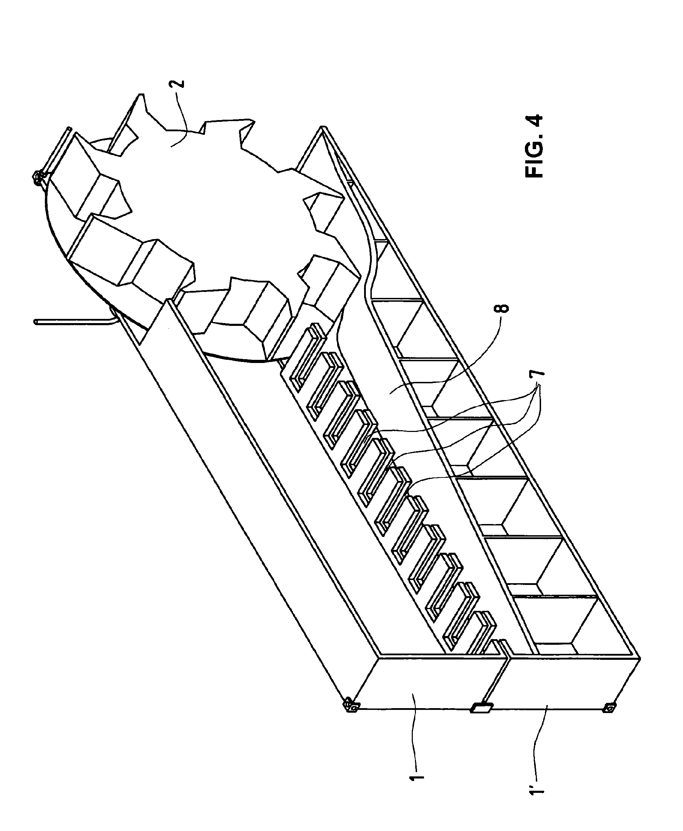

Figur 4 zeigt schematisch einen Längsschnitt durch die in Figur 3 gezeigten Standard-Container 1,1'. Wie in Figur 4 gezeigt, können in einem Bodenteil des Standard-Containers 1 und in einem Deckenteil des Standard-Containers 1' entsprechende Durchbrüche 7 angeordnet sein. Wie in Figur 4 gezeigt, kann der Standard-Container 1' eine Wasserführung 8 umfassen, so dass ein Wasserstrom optimal zu der Wasserturbine 2 geleitet wird.

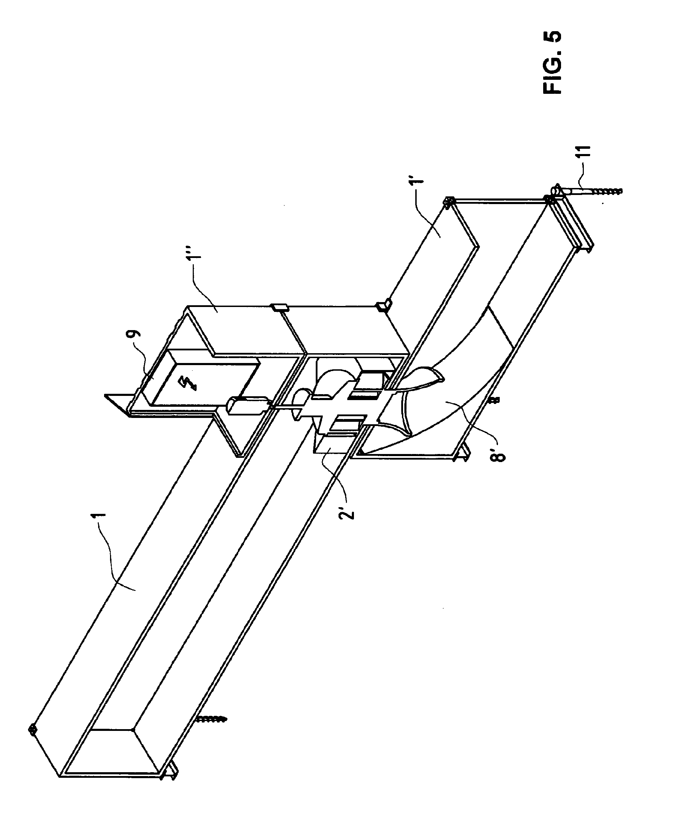

Figur 5 zeigt einen Längsschnitt einer Anordnung mit drei Standard-Container 1,1',1 ". Dabei kann der Standard-Container 1' und der Standard-Container 1'' mittels einer entsprechenden Zweiteilung eines einzelnen Standard-Containers hergestellt sein. Der Standard-Container 1 kann an einem Ende eine Kaplan-Turbine 2' umfassen. Im Standard-Container 1 kann eine Wasserführung 8' zur Wegführung des aus der Kaplan-Turbine 2' abfliessenden Wassers umfassen. An der Kaplan-Turbine können feste Flügel oder einstellbare Flügel angebracht sein. Der Standard-Container 1' kann auf einer entsprechenden Stirnseite vollständig offen sein. Wie in Figur 5 skizziert, kann der Generator 3 im Standard-Container 1" angeordnet sein. Der Standard-Container 1" kann zusätzlich eine Elektroeinheit 9 für Steuerungsaufgaben oder Überwachungsaufgaben umfassen.

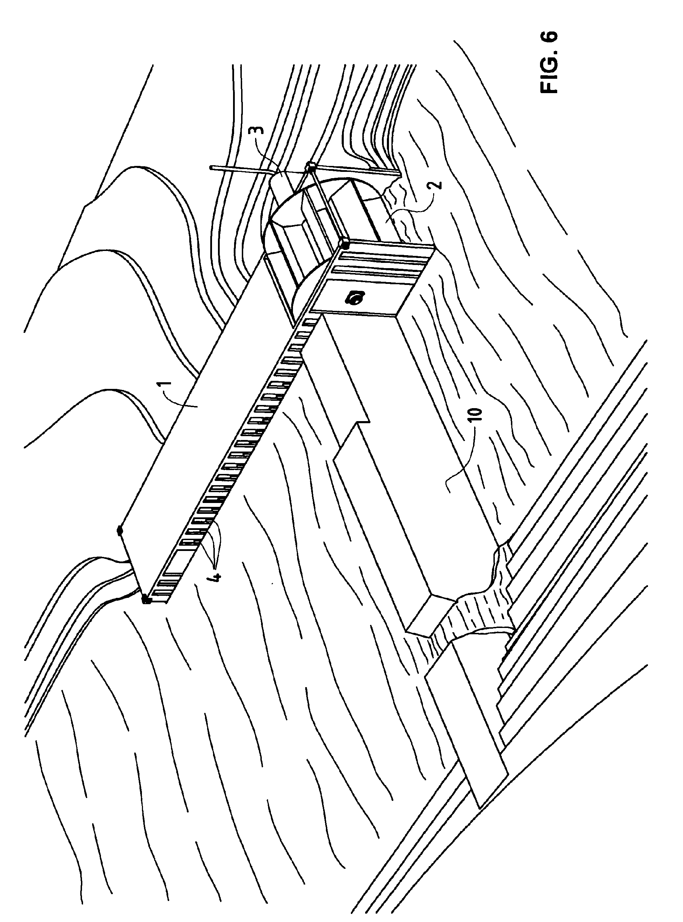

Figur 6 zeigt ein Gelände mit einer Anordnung zur Erzeugung von elektrischer Energie gemäss der ersten Ausführungsvariante der Erfindung. Ein Standard-Container 1 umfasst an einem Ende eine Wasserturbine 2 und einen Generator 3. Beispielsweise im Bereich der angebrachten Wasserturbine 2 ist in einer Querrichtung zum Standard-Container 1 eine Staumauer 10 zur Stauung eines Wasserstroms - wie beispielsweise eines Bachs oder eines Flusses - angebracht. Die Staumauer 10 kann beispielsweise aus Beton hergestellt sein. Selbstverständlich kann die Staumauer 10 aus irgendeinem anderen Material hergestellt sein. So kann die Staumauer 10 beispielsweise aus einem oder aus mehreren Standard-Container bestehen. Wie in Figur 6 skizziert, wird der Wasserstrom oberhalb der Staumauer 10 aufgestaut und das aufgestaute Wasser überflutet durch ein entsprechendes Eindringen von Wasser in die Einlassöffnungen 4 einen Bereich des Standard-Containers 1. Die Wasserturbine 2 wird durch dieses Wasser angetrieben, wobei durch den Generator 3 elektrische Energie erzeugt wird. Der Standard-Container 1 kann einfach transportiert werden und wird ohne Modifikation im Gelände eingebaut. Das Erstellen einer Staumauer 10 kann ohne besondere technische Schwierigkeiten erfolgen. Deshalb kann auch an abgelegenen Standorten ohne Spezialisten in kurzer Zeit ein funktionsfähiges Wasserkraftwerk erstellt werden, wodurch diese Technologie insbesondere für schwach besiedelte Standorte oder beispielsweise in Dritt-Welt-Ländern sehr effektiv genutzt werden kann.

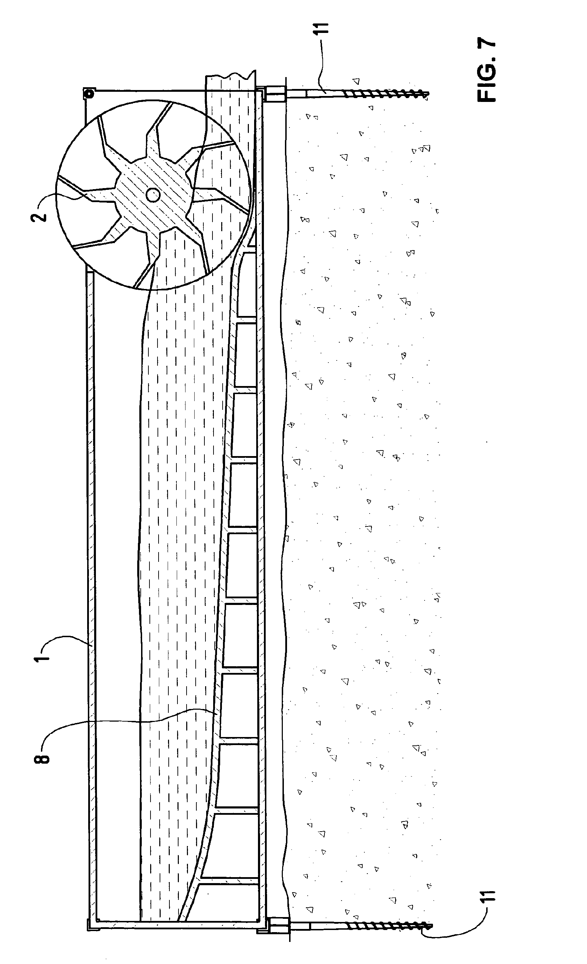

Figur 7 zeigt einen Längsschnitt durch die Anordnung gemäss der ersten Ausführungsvariante der Erfindung. Ein Standard-Container 1 umfasst an einem Ende eine Wasserturbine 2. Ein Bereich des Standard-Containers 1 ist mit Wasser überflutet und Wasser aus diesem überfluteten Bereich treibt die Wasserturbine 2 an. Im Standard-Container 1 ist eine Wasserführung 8 angebracht, sodass Wasser aus dem überfluteten Bereich optimal zur Wasserturbine 2 geführt wird. Der Standard-Container 1 ist mit Erdankerschrauben 11 fest mit dem Untergrund verbunden. Die Erdankerschrauben 11 mit einer Länge von beispielsweise 2 - 4 m erlauben eine stabile Verankerung der erfindungsgemässen Anordnung mit dem Untergrund und es wird kein Betonfundament benötigt.

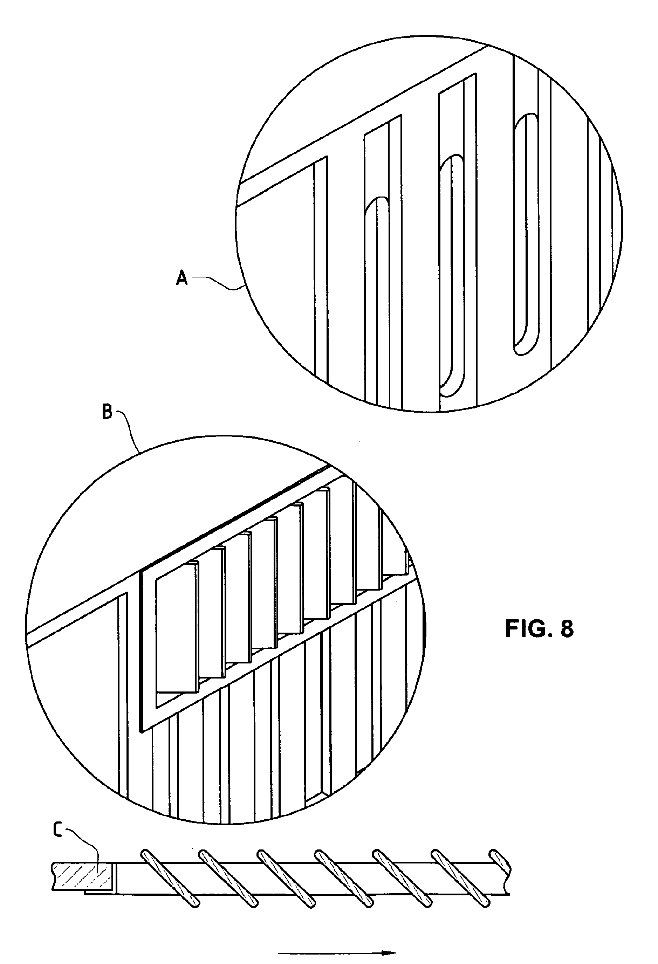

Die erfindungsgemässe Anordnung kann wie in Figur 6 gezeigt in einem Gelände eingebaut sein. Durch die Staumauer 10 wird das Wasser eines Wasserstroms aufgestaut und das Wasser dringt deshalb durch die seitlich angebrachte Einlassöffnung 4 ein. In Figur 8 sind zwei Varianten einer Einlassöffnung 4 gezeigt. In der Variante A umfasst die Einlassöffnung 4 einfache Schlitze, welche an einem oberen Bereich einer Seitenwand eines Standard-Containers 1 angebracht sind. Diese Variante A ist besonders für einen Wasserstrom geeignet, welcher kein oder nur wenige Schwemmgut mitführt. In der in Figur 8 gezeigten Variante B umfasst die Einlassöffnung eine Lamellenkonstruktion, welche wie im Querschnitt C gezeigt Lamellen umfasst, welche schräg gegenüber der durch den Pfeil angezeigten Stromrichtung angeordnet sind. Diese Variante B ist besonders für einen Wasserstrom geeignet, welcher Schwemmgut mitführt. Durch die schräge Anordnung der Lamellen der Einlassöffnung 4 wird verhindert, dass Schwemmgut in den Standard-Container 1 eindringt und die Wasserturbine 2 beschädigt.

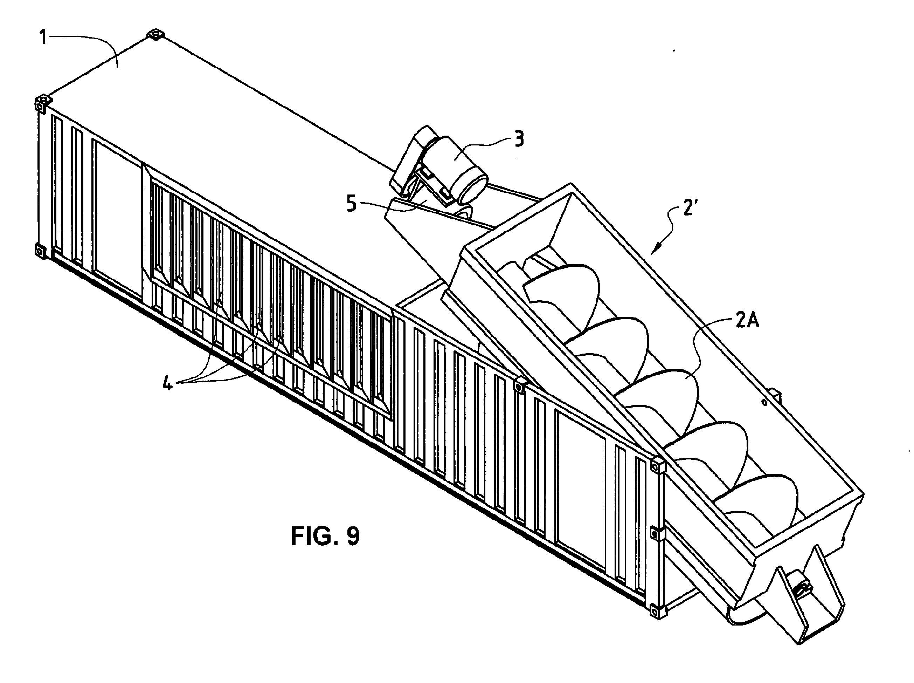

In Figur 9 wird eine Anordnung zur Erzeugung von elektrischer Energie gemäss einer nicht beanspruchten Ausführungsform der Erfindung illustriert. Hier wird als Wasserturbine eine archimedische Schnecke 2' verwendet. Dieses Element wird manchmal auch Förderschnecke oder als Schneckenförderer genannt. Das wesentliche Element einer archimedischen Schraube ist ein schraubenförmiges Bauteil 2A, welches üblicherweise als Schnecke bezeichnet wird. Auf Grund des Wasserflusses durch die Wasserturbine 2' wird die Schnecke 2A gedreht, was wie oben beschrieben zur Generierung der elektrischen Energie im Generator 3 führt. Die archimedische Schnecke 2' ist ebenfalls an einem Behältnis 1 angebracht, und über ein Transmissionselement 5 mit dem Generator 3 verbunden. Auch in dieser Ausführungsvariante kann das Behältnis durch einen Standard-Container 1 gebildet werden, an welchem mindestens eine Einlassöffnung 4 angebracht ist.

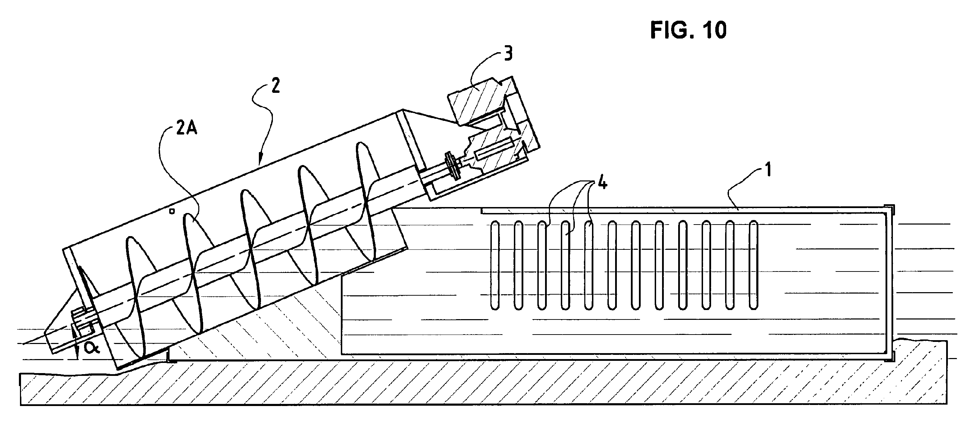

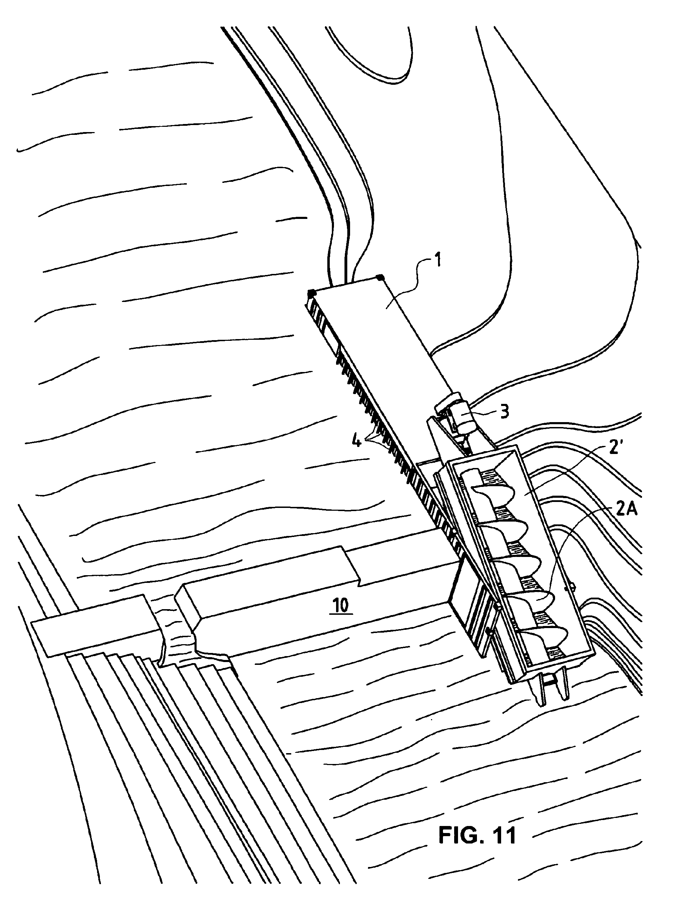

Wie in Figur 10 illustriert, liegt die archimedische Schnecke 2' unter einem bestimmten Neigungswinkel α gegenüber der Ebene des Standard-Containers 1. Dieser Neigungswinkel α kann insbesondere auch variabel sein, so dass die Anordnung optimal an die Gelände- oder Wasserstandverhältnisse angepasst werden kann. Auch ist es denkbar, diese Anpassung dynamisch zu gestalten, beispielsweise mit Hilfe eines Computers, welcher die Neigung der archimedischen Schraube 2' auf Grund gemessener Parameter automatisiert anpassen kann. Selbstverständlich ist diese automatisierte Anpassung nur eine Option, welche nicht in allen erfindungsgemässen Anordnungen zwingend vorhanden sein muss. Die Anordnung gemäss einer zweiten Ausführungsvariante kann, wie in Figur 11 dargestellt, ähnlich wie die Anordnung gemäss der ersten Ausführungsvariante der Erfindung eingebaut werden.

Die erfindungsgemässen Anordnungen können in verschiedenen Versionen hergestellt sein. So kann eine "Easy Version" einen einzelnen Standard-Container 1 umfassen und eingerichtet sein, um elektrische Energie im Bereich von 10 kWh - 40 kWh herzustellen, wobei der Wasserstrom ein Gefälle ab 0.5 - 3 m und eine Wassermenge von 0.5 - 3 m³/s aufweist. Eine "Multi Version" kann beispielsweise mindestens zwei Standard-Container 1,1 umfassen und eingerichtet sein, um elektrische Energie im Bereich von 40 kWh - 150 kWh herzustellen, wobei der Wasserstrom ein Gefälle ab 0.5 - 4 m und eine Wassermenge von 0.5 - 4 m³/s aufweist. Die "Easy Version" kann in der Abmessung 40' hergestellt sein und die Masse 1211 x 235 x 259 cm aufweisen. Das Gewicht der "Easy Version" kann komplett ca. 10 bis 20 t betragen.

Die Vorteile der erfindungsgemässen Anordnung sind, dass diese netzunabhängig und ohne grosse Vorbereitungsarbeiten überall eingesetzt und rasch zur kostengünstigen Energieproduktion verwendet werden kann. Die Verwendung von genormten, vorkonfektionierten Teilen und Massen gewähren die weltweite Mobilität sowie Einsatz- und Produktionsbereitschaft in kürzester Zeit. Es werden nur bekannte und bewährte Komponenten verwendet. Diese gewähren für den Betreiber von Beginn weg ein einwandfreies Funktionieren der Mobilepowerbox. Die einfache und robuste Bauart schliesst einen aufwändigen Unterhalt aus. Die Wartung der erfindungsgemässen Anordnung ist minimal. Nach kurzer und einfacher Instruktion können Überwachung und Unterhalt durch vor Ort angelerntes Personal ausgeführt und sichergestellt werden. Die erfindungsgemässe Anordnung ist für im Aufbau befindliche Siedlungsgebiete geeignet. Sie sichert einen Beitrag zur umweltverträglichen, nachhaltigen und lokalen Energieversorgung. Die erfindungsgemässe Anordnung ist verglichen mit herkömmlichen Wasserkraftwerken ein Lowcost-Modell sowohl bei der Herstellung als auch beim Betrieb. Die Verwendung eines Synchrongenerators gewährleistet, dass auch ohne ein örtliches Stromnetz Energie erzeugt werden kann.

## Patentansprüche

1. Anordnung zur Erzeugung von elektrischer Energie aus dem Antrieb einer Wasserturbine (2) durch Wasserkraft und dem entsprechenden Antrieb eines Generators (3) durch die Wasserturbine (2), wobei die Anordnung mindestens ein Behältnis (1,1',1") umfasst, wobei an der Anordnung mit dem mindestens einen Behältnis (1,1',1") mindestens eine Einlassöffnung (4) für das Überfluten mit Wasser eines ersten Bereichs der Anordnung angebracht ist, und wobei an einem zweiten Bereich der Anordnung eine aufgrund der Überflutung des ersten Bereichs antreibbare Wasserturbine (2) angebracht ist,
**dadurch gekennzeichnet,**
**dass** die Einlassöffnung (4) an einem oberen Drittel einer Seitenwand des Behältnisses (1,1',1") angebracht ist.

2. Anordnung nach Anspruch 1, **dadurch gekennzeichnet, dass** die Wasserturbine (2) an einem Ende eines Behältnisses (1,1',1 ") angebracht ist.

3. Anordnung nach einem der Ansprüche 1 oder 2, **dadurch gekennzeichnet, dass** die Einlassöffnung (4) aus Lamellen besteht, welche parallel zu einer Flussrichtung eines Wasserstroms angebracht sind und welche derart angeordnet sind, dass im Wasserstrom geführtes Schwemmgut wie z.B. Holz oder ähnliches an den Lamellen vorbeigeführt wird.

4. Anordnung nach einem der Ansprüche 1 bis 3, **dadurch gekennzeichnet, dass** die Anordnung aus einem einzelnen Behältnis (1) besteht.

5. Anordnung nach einem der Ansprüche 1 bis 4, **dadurch gekennzeichnet, dass** die Anordnung einen Generator (3) zur Erzeugung von elektrischer Energie umfasst.

6. Anordnung nach einem der Ansprüche 1 bis 5, **dadurch gekennzeichnet, dass** die Wasserturbine (2) aus einer Radturbine besteht.

7. Anordnung nach einem der Ansprüche 1 bis 5, **dadurch gekennzeichnet, dass** die Wasserturbine (2) aus einer Kaplan-Turbine oder aus einer Francis-Turbine besteht.

8. Anordnung nach einem der Ansprüche 1 bis 5, **dadurch gekennzeichnet, dass** die Wasserturbine (2) aus einer archimedischen Schraube (2') besteht.

9. Anordnung nach einem der vorangehenden Ansprüche, **dadurch gekennzeichnet, dass** alle Teile der Anordnung vorgefertigt sind und am Einsatzort zusammenfügbar und aufbaubar sind.

## Claims

1. Structure for generating electrical energy from the drive of a water turbine (2) by hydropower and the corresponding drive of a generator (3) by the water turbine (2), the structure comprising at least one container (1, 1', 1"), provided on the structure with the at least one container (1, 1', 1 ") being at least one admission opening (4) for the flooding with water of a first region of the structure, and provided on a second region of the structure being a water turbine (2), driveable on the basis of the flooding of the first region,
**characterised**
**in that** the admission opening (4) is provided on an upper third of a side wall of the container (1, 1', 1").

2. Structure according to claim 1, **characterised in that** the water turbine (2) is installed at an end of a container (1, 1', 1").

3. Structure according to one of the claims 1 or 2, **characterised in that** the admission opening (4) comprises bars, which are installed parallel to a direction of flow of a stream of water and which are disposed such that floating refuse, such as e.g. wood or the like, is directed past the bars.

4. Structure according to one of the claims 1 to 3, **characterised in that** the structure comprises a single container (1).

5. Structure according to one of the claims 1 to 4, **characterised in that** the structure comprises a generator (3) for generation of electrical energy.

6. Structure according to one of the claims 1 to 5, **characterised in that** the water turbine (2) consists of a wheel turbine.

7. Structure according to one of the claims 1 to 5, **characterised in that** the water turbine (2) consists of a Kaplan turbine or a Francis turbine.

8. Structure according to one of the claims 1 to 5, **characterised in that** the water turbine (2) consists of an Archimedean screw.

9. Structure according to one of the preceding claims, **characterised in that** all parts of the structure are prefabricated and are able to be assembled and set up at the site of operation.

## Revendications

1. Agencement pour générer de l'énergie électrique à partir de l'entraînement d'une turbine à eau (2) par de l'énergie hydraulique et l'entraînement correspondant d'un générateur (3) par ladite turbine à eau (2), ledit agencement comprenant au moins un contenant (1, 1', 1"), audit agencement avec ledit au moins un contenant (1, 1', 1") étant prévue au moins une ouverture d'admission (4) pour submerger avec de l'eau une première région dudit agencement, et étant prévue, à une seconde région dudit agencement, une turbine à eau (2) susceptible d'être entraînée sur la base de la submersion de ladite première région,
**caractérisé**
**en ce que** ladite ouverture d'admission (4) est prévue au niveau d'un tiers supérieur d'une paroi latérale dudit contenant (1, 1', 1").

2. Agencement selon la revendication 1, **caractérisé en ce que** ladite turbine à eau (2) est installée à une extrémité dudit contenant (1, 1', 1").

3. Agencement selon l'une des revendications 1 ou 2, **caractérisé en ce que** ladite ouverture d'admission (4) comprend des lamelles qui sont installées en parallèle avec une direction d'écoulement d'un courant d'eau et qui sont disposées de manière à ce que des bris flottants, tels que du bois ou autre, soient acheminés en laissant de côté lesdites lamelles.

4. Agencement selon l'une des revendications 1 à 3, **caractérisé en ce que** l'agencement comprend un contenant (1) unique.

5. Agencement selon l'une des revendications 1 à 4, **caractérisé en ce que** l'agencement comprend un générateur (3) pour la génération d'énergie électrique.

6. Agencement selon l'une des revendications 1 à 5, **caractérisé en ce que** ladite turbine à eau (2) est constituée d'une turbine à roue.

7. Agencement selon l'une des revendications 1 à 5, **caractérisé en ce que** ladite turbine à eau (2) est constituée d'une turbine Kaplan ou d'une turbine Francis.

8. Agencement selon l'une des revendications 1 à 5, **caractérisé en ce que** ladite turbine à eau (2) est constituée d'une vis d'Archimède.

9. Agencement selon l'une quelconque des revendications précédentes, **caractérisé en ce que** toutes les parties de l'agencement sont préfabriquées et sont susceptibles d'être assemblées et mises en place au site d'exploitation.
